(19) Europäisches Patentamt
European Patent Office
Office européen des brevets

(11) **EP 2 889 388 B1**

(12) **EUROPEAN PATENT SPECIFICATION**

(45) Date of publication and mention
of the grant of the patent:
**03.04.2019 Bulletin 2019/14**

(21) Application number: **13830532.1**

(22) Date of filing: **23.07.2013**

(51) Int Cl.:
*B22F 3/02* (2006.01)     *B22F 3/10* (2006.01)
*B22F 3/24* (2006.01)     *B22F 5/08* (2006.01)
*C22C 33/02* (2006.01)     *C22C 38/00* (2006.01)
*C22C 38/08* (2006.01)     *C22C 38/12* (2006.01)
*C22C 38/22* (2006.01)     *F16H 55/06* (2006.01)

(86) International application number:
**PCT/JP2013/069857**

(87) International publication number:
**WO 2014/030480 (27.02.2014 Gazette 2014/09)**

(54) **METHOD OF MANUFACTURING A MACHINE PART**

VERFAHREN ZUR HERSTELLUNG EINES MASCHINENBAUTEILS

PROCÉDÉ DE FABRICATION D'UNE PIÈCE DE MACHINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.08.2012 JP 2012184184**

(43) Date of publication of application:
**01.07.2015 Bulletin 2015/27**

(73) Proprietor: **NTN Corporation**
**Osaka-shi, Osaka 550-0003 (JP)**

(72) Inventors:
• **MOURI Toshihiko**
**Ama-gun**
**Aichi 497-8541 (JP)**
• **MATSUZUKI Takehiro**
**Iwata-shi**
**Shizuoka 438-8510 (JP)**
• **NANBU Shinichi**
**Ama-gun**
**Aichi 497-8541 (JP)**
• **SHIRANAMI Makoto**
**Ama-gun**
**Aichi 497-8541 (JP)**
• **SATOJI Fuminori**
**Ama-gun**
**Aichi 497-8541 (JP)**

(74) Representative: **Eder, Christian**
**Eder Schieschke & Partner mbB**
**Patentanwälte**
**Elisabethstrasse 34/II**
**80796 München (DE)**

(56) References cited:
EP-A2- 1 839 780     JP-A- H06 212 368
JP-A- 2005 336 609     JP-A- 2007 262 536
JP-A- 2009 120 918     JP-A- 2009 203 535
JP-A- 2009 203 535     JP-A- 2010 126 786
JP-A- 2012 077 348     JP-A- 2012 077 348
US-A- 5 082 433     US-A1- 2003 215 349
US-A1- 2008 025 863     US-B1- 6 338 747

**Description**

Technical Field

The present invention relates to method of manufacturing a machine part and more particularly to a method of manufacturing a machine part formed of a sintered metal.

Background Art

For example, a machine part to be used for a power transmission application (power transmission part) or a machine part to be used in a part subjected to pressure in a pump or the like (pressure receiving part) is required to have particularly high mechanical strength, abrasion resistance, fatigue strength, and the like. Therefore, a machine part of this kind is generally formed of an ingot material. However, in order to obtain a machine part formed of an ingot material satisfying the above-mentioned demand characteristics with high accuracy, a number of processing steps are required. Further, a great material loss is caused in such steps. Therefore, a machine part obtained by processing an ingot material is generally liable to have high cost. In such circumstances, various attempts have recently been made to produce the machine part as described above by using a sintered metal (sintered material).

For example, in Patent Literature 1, the applicant of the present application has proposed a machine part (power transmission part), which is formed of a sintered material obtained by molding granulated powder of fine powders each containing iron as a main component into a green compact, followed by sintering, and which is obtained by subjecting the sintered material to heat treatment (quenching and tempering treatment). The sintered material to be used as a base material for the machine part in Patent Literature 1 has a high density (a true density ratio of 85% or more) as compared to a general sintered material because of, for example, the following reasons: (1) the sintered material is produced by using as a main raw material the granulated powder obtained through granulation of the fine powders so as to have an appropriate grain size, and hence exhibits improved flowability in a mold, and by extension, improved moldability even though the fine powders are used; and (2) the granulated powder obtained through granulation of the fine powders has a large surface area, and hence sintering property between adjacent granulated powders is improved. Therefore, the machine part formed of such sintered material has improved mechanical strength, abrasion resistance, and the like as compared to a machine part formed of the general sintered material. In addition, the sintered material proposed in Patent Literature 1 can be manufactured through similar steps to those in the case of the general sintered material except that raw material powder containing as a main raw material the granulated powder is used. In view of the foregoing, when a construction of Patent Literature 1 is adopted, it is considered that a machine part having improved demand characteristics including mechanical strength and abrasion resistance can be produced with high accuracy at relatively low cost.

Citation List

Patent Literature 1: JP 2011-94789 A
Patent Literature 2: EP 1 839 780 A2 relates to a method of manufacturing a machine part.

Summary of Invention

Technical Problem

However, the machine part formed of a sintered material proposed in Patent Literature 1 is still far inferior in mechanical strength, abrasion resistance, and the like to a machine part formed of an ingot material owing to its true density ratio being set to 85% or more. Therefore, its application is inevitably limited. In addition, in the construction of Patent Literature 1, it is essential to produce (prepare) the granulated powder of high quality in order to enable stable manufacturing (mass-production) of a desired machine part, but a lot of labor and cost are required for stably obtaining such granulated powder of high quality. Therefore, the construction of Patent Literature 1 cannot achieve a cost reduction effect as much as expected, and the cost of the machine part may be increased instead.

In view of such circumstances, an object of the present invention is to provide a machine part formed of a sintered metal, which can be mass-produced at low cost and is excellent in mechanical strength, abrasion resistance, and the like.

Solution to Problem

According to one embodiment of the present invention, which has been made to achieve the above-mentioned object, there is provided a method of manufacturing a machine part, comprising a sintered compact obtained by sintering a green compact of raw material powder that contains as a main raw material iron-based alloy powder containing molybdenum and has 0.1 to 0.8 mass% of carbon powder blended therein, wherein the manufacturing method comprises a compression molding step of compression molding the raw material powder, wherein in the compression molding step, a solid lubricant adheres to surfaces defining a cavity of the mold, and then the compression molding of the raw material powder filled into the cavity is performed in a state in which the mold is heated at a temperature equal to or higher than a melting point of the solid lubricant, such that a lubricant component of the solid lubricant adhering to the surfaces defining the cavity can diffuse and penetrate between the raw material powder and the cavity and between the powders constituting the raw material powder, the machine part including at least a hardened layer formed through heat treatment that follows a sintering step of heating the green compact at 1 200°C or more and 1 300°C or less, the machine part having a true density ratio of 97% or more and less than 100%.

The true density ratio as used herein is represented by the calculation equation described below.

$$\text{True density ratio}=(\text{density of entire machine part formed of sintered compact/true density})\times 100 \ [\%]$$

It should be noted that the "true density" in the equation means a theoretical density of a material having no pores in its interior portion, such as an ingot material. In addition, the "density of entire machine part formed of sintered compact" in the equation is measured by, for example, a method specified in JIS Z2501.

As described above, the machine part formed of a sintered metal according to one embodiment of the present invention has a true density ratio of 97% or more and less than 100% (roughly corresponding to 7.6 g/cm$^3$ or more and less than 7.8 g/cm$^3$, when converted into a density), and is highly densified to the extent approximate to that in the case of an ingot material. Therefore, the machine part exhibits excellent characteristics in mechanical strength, abrasion resistance, fatigue strength, and the like.

As a result of diligent studies, the inventors of the invention of the present application have found that such machine part formed of a sintered metal having a high density and high strength can be obtained by adopting using the sintered compact (sintered material) including a hardened layer formed through heat treatment after the sintering, and further adopting the following constructions (1) and (2) in a material aspect: (1) selectively using as main powder constituting the raw material powder the iron-based alloy powder containing molybdenum; and (2) setting the blending ratio of the carbon powder in the raw material powder to 0.1 to 0.8 mass%, which is lower than that in a general sintered metal. Specifically, the adoption of the above-mentioned construction (1) improves compression moldability and sintering property. The adoption of the above-mentioned construction (2) further improves the compression moldability along with a reduction in the blending amount of carbon having a low specific gravity, while securing lubricity between powders and heat treatment property (heat treatment property after the sintering). Thus, a high density is achieved.

On the other hand, the use of the raw material powder containing the iron-based alloy powder as a main raw material and having an appropriate amount of carbon powder blended therein, as the raw material powder for obtaining the machine part eliminates the need for troublesome treatment such as granulation treatment proposed in Patent Literature 1 in the process of preparing and producing the raw material powder. Therefore, the manufacturing cost can be significantly reduced as compared to the construction of Patent Literature 1. As described above, according to one embodiment of the present invention, it is possible to obtain the machine part formed of a sintered metal, which can be mass-produced at low cost and is excellent in mechanical strength, abrasion resistance, and the like.

Herein, a method for the above-mentioned heat treatment is not particularly limited, and any known quenching method such as carburizing quenching, immersion quenching, or high-frequency quenching can be appropriately selected. It should be noted that tempering is preferably performed in combination after the quenching in order to provide the machine part with high toughness as well.

In the above-mentioned manufacturing method according to one embodiment of the present invention, the compression molding step comprises compression molding the raw material powder in a state in which a solid lubricant adheres to a molding surface of the mold. Further, in addition to or instead of the foregoing, the raw material powder to be used may have a solid lubricant added thereto. This improves the lubricity between the raw material powder and the mold or the lubricity between the powders, and hence provides an advantage in obtaining the green compact having a high density, and by extension, the machine part formed of a sintered metal having high strength. It should be noted that, when the raw material powder to be used has a solid lubricant added thereto, the addition amount of the solid lubricant is preferably as low as possible from the viewpoint of highly densifying the green compact. Specifically, the addition amount of the solid lubricant is preferably 0.1 mass% or less, more preferably 0.05 mass% or less in terms of outer percentage, given that the mass of the raw material powder is defined as 100%.

In the above-mentioned manufacturing method according to one embodiment of the present invention, the compression molding of the raw material powder is performed in a state in which the mold is heated to a temperature equal to or higher than the melting point of the solid lubricant. This allows a lubricant component to diffuse and penetrate with high efficiency. Therefore, the addition amount (blending amount) of the solid lubricant can be reduced. Thus, the green compact having a high density, and by extension, the machine part having high strength can be easily obtained at low cost.

In the machine part having the above-mentioned construction, at least a part of the hardened layer may comprise a dense layer in which a porous structure is more densified than in another area. With this, the machine part can achieve a higher density and higher strength.

It should be noted that such machine part may be obtained by performing a plastic processing step of subjecting the sintered compact to plastic processing between the sintering step and the heat treatment step. As the plastic processing in the plastic processing step, for example, rolling can be adopted. However, the processing method to be adopted is appropriately selected depending on, for example, the shape of the machine part. Whatever processing method is adopted, cold plastic processing can efficiently improve the accuracy and density (strength) of a portion to be processed as compared to warm or hot plastic processing.

The hardness of the machine part having the above-mentioned construction may gradually reduce from a surface to a core portion (a center portion in the thickness direction). This can provide the machine part with toughness, and hence prolong the durability lifetime of the machine part.

In the machine part having the above-mentioned construction, as the iron-based alloy powder constituting the raw material powder, there may be used iron-based alloy powder containing 0.2 to 0.8 mass% of molybdenum, given that the mass of the raw material powder is defined as 100. In addition, as the iron-based alloy powder, there may be used iron-based alloy powder further containing 0.2 to 0.8 mass% of nickel (Ni), given that the mass of the raw material powder is defined as 100. In addition, the raw material powder may further contain chromium (Cr) powder, manganese sulfide (MnS) powder, or the like.

The present invention described above can be preferably applied to the production of a machine part such as a gear or a cam by using a sintered metal. Needless to say, the present invention is not only applied to a gear, a cam, or the like and can also be preferably applied to the production of any other machine part (for example, a bearing) by using a sintered metal.

Advantageous Effects of Invention

As described above, according to one embodiment of the present invention, it is possible to mass-produce the machine part formed of a sintered metal exhibiting excellent characteristics in mechanical strength, abrasion resistance, and the like at low cost.

Brief Description of Drawings

FIG. 1 is a perspective view of a gear as a machine part.
FIG. 2 is an enlarged sectional view of a portion X illustrated in FIG. 1.
FIG. 3 is a block diagram illustrating a manufacturing procedure of the gear illustrated in FIG. 1 according to one embodiment of the present invention.
FIG. 4 is a schematic sectional view illustrating an initial stage of a compression molding step.
FIG. 5 is a schematic sectional view illustrating a middle stage of the compression molding step.
FIG. 6 is an enlarged view of a main portion illustrating one embodiment of a plastic processing step.
FIG. 7 is a view schematically illustrating a state in which the shape of a sintered compact changes along with plastic processing.
FIG. 8 is a graph showing actually measured results of the hardness of the sintered compact before and after the plastic processing.

Description of Embodiments

Embodiments of the present invention are hereinafter described with reference to the drawings.

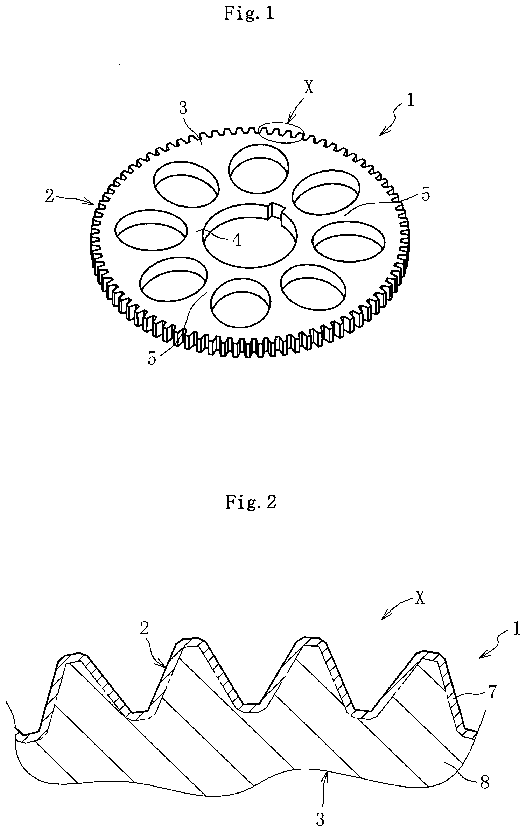

FIG. 1 is a perspective view of a machine part, and FIG. 2 is an enlarged sectional view (enlarged sectional view in the plane surface perpendicular to the axis) of a portion X illustrated in FIG. 1. The machine part illustrated in FIG. 1 is, for example, a gear (gear for a transmission) 1 to be used by being incorporated into a transmission of an automobile. The gear 1 includes a large-diameter annular portion 3 having a tooth surface 2 along its outer circumference, a small-diameter annular portion 4 having a mounting hole for mounting the gear 1 to a rotation shaft (not shown), and a plurality of connecting portions 5 for connecting the large-diameter annular portion 3 and the small-diameter annular portion 4, in an integrated manner.

The gear 1 is formed of a sintered metal and has a true density ratio of 97% or more and less than 100%. A hardened layer (surface hardened layer) 8 is formed in the entire area of the gear 1 through heat treatment after sintering (by subjecting a sintered compact to heat treatment). In addition, as illustrated in FIG. 2, a dense layer 7 in which a porous structure is more densified than in another area is formed in the area in which the tooth surface 2 is formed (outer circumference of the large-diameter annular portion 3) in the gear 1. The dense layer 7 is formed by subjecting the outer circumference of a sintered compact to plastic processing, and the hardened layer 8 is formed by subjecting the sintered compact after the plastic processing (after the formation of the dense layer 7) to heat treatment, while the methods of forming the dense layer 7 and the hardened layer 8 are described in detail later. That is, the hardened layer 8 is formed so as to include the dense layer 7. For such construction, the dense layer 7 has a higher hardness than the hardened layer 8. In addition, in each of the portions 3 to 5 of the gear 1, the hardness is the highest in the surface and gradually reduces toward the core portion (center portion in the thickness direction). Therefore, the tooth surface 2 has the highest mechanical strength, the highest abrasion resistance, and the like of the portions constituting the gear 1.

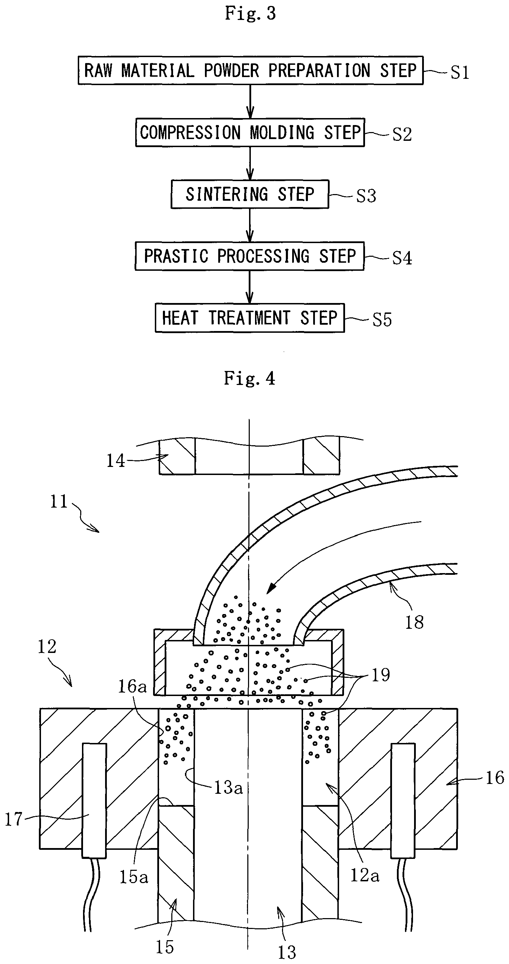

The gear 1 as the machine part having the above-mentioned construction is manufactured by a raw material powder preparation step S1, a compression molding step S2, a sintering step S3, a plastic processing step S4, and a heat treatment step S5 in the stated order, as illustrated in FIG. 3. The steps are hereinafter described in that order.

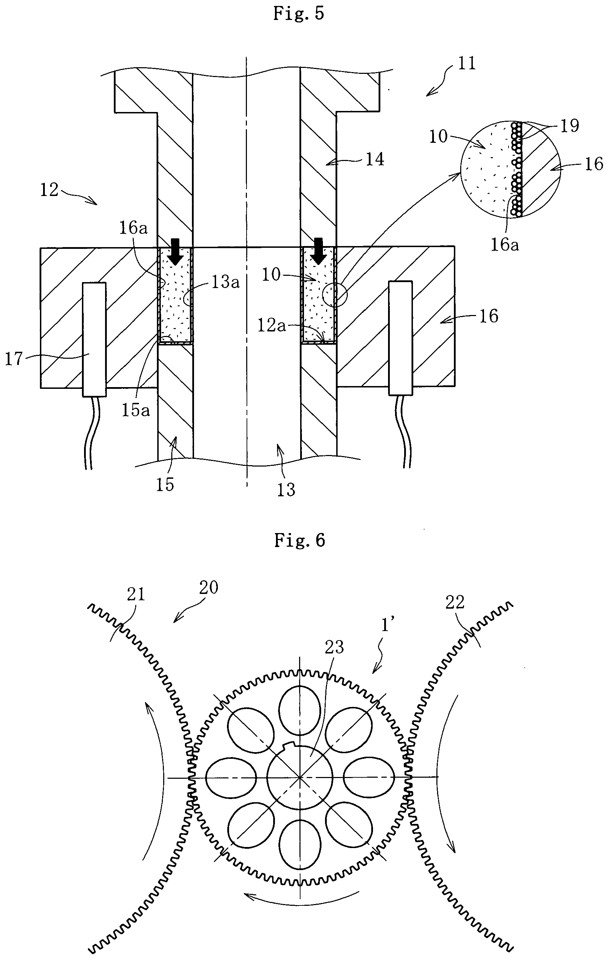

In the raw material powder preparation step S1, raw material powder 10 (see FIG. 5) as a material for forming the gear 1 is prepared and produced. Herein, as the raw material powder 10, there is used raw material powder that contains as a main raw material (main powder) iron-based alloy powder containing molybdenum (Mo) and nickel (Ni) and has an appropriate amount of carbon (C) powder blended therein. As the iron-based alloy powder described above, partially alloyed powder or completely alloyed powder of molybdenum, nickel, and iron (Fe) is used. The ratios of the elements in the raw material powder 10 are as follows: 0.2 to 0.8 mass% of molybdenum, 0.2 to 0.8 mass% of nickel, and 0.1 to 0.8 mass% of carbon, with the balance being iron (and inevitable impurities), given that the mass of the raw material powder 10 is defined as 100. Herein, raw material powder in which the blending ratios of molybdenum, nickel, and carbon are each 0.5 mass%, with the balance being iron (and inevitable impurities) is used.

As the iron-based alloy powder, one having an average grain size of from 40 to 150 $\mu$m is used in consideration of cost and compression moldability. Specifically, small-size iron-based alloy powder having an average grain size of less than 40 $\mu$m is expensive, and reduces the compression moldability owing to its poor flowability. In contrast, when large-size iron-based alloy powder having an average grain size exceeding 150 $\mu$m is used, it is difficult to obtain a green compact having a high density because large pores are liable to be formed between the powders.

One kind or two or more kinds of solid lubricants, such as zinc stearate and molybdenum disulfide, may be added (blended in terms of outer percentage) to the raw material powder 10. In this embodiment, less than 0.05 mass% of zinc stearate is added to the raw material powder 10, given that the mass of the raw material powder 10 is defined as 100.

Next, in the compression molding step S2, the raw material powder 10 is subjected to compression molding by using a molding device 11 as illustrated in FIGS. 4 and 5, to provide a green compact having a shape close to that of the gear 1 illustrated in FIG. 1 (substantially finished product shape). The molding device 11 includes, as main constituents, a mold 12 having a core 13, upper and lower punches 14, 15, and a die 16, which are disposed coaxially, a heater 17 for heating the die 15 (mold 12), and a lubricant injection nozzle 18 for injecting a solid lubricant 19 into a cavity 12a of the mold 12. The mold 12 is set in, for example, a CNC press machine using as a drive source a servomotor (not shown). In addition, the mold 12 may be equipped with a vibration imparting device for imparting vibration in order to enhance filling property of the raw material powder 10, while the illustration is omitted.

In the molding device 11 having the above-mentioned construction, first, the solid lubricant 19 is injected from the lubricant injection nozzle 18 arranged between the core 13 and the upper punch 14 into the cavity 12a as illustrated in FIG. 4. Thus, the solid lubricant 19 is allowed to adhere to the surfaces defining the cavity 12a (a radially outer surface 13a of the core 13, an upper edge surface 15a of the lower punch 15, and a radially inner surface 16a of the die 16) (see the enlarged view in FIG. 5). As the solid lubricant 19, there may be used any lubricant of the same kind as or different kind from the solid lubricant added to the raw material powder 10. In addition, there may be used not only one kind, but a mixture of two or more kinds. Herein, a solid lubricant of the same kind as the solid lubricant added to the raw material powder 10, that is, zinc stearate is used as the solid lubricant 19.

After the solid lubricant 19 is allowed to adhere to the surfaces defining the cavity 12a as described above, the lubricant injection nozzle 18 is moved backward and the raw material powder 10 is loaded and filled into the cavity 12a. Next, the upper punch 14 is relatively moved so as to be close to the lower punch 15, to pressurize the the raw material powder 10 filled into the cavity 12 at a pressure of, for example, from 800 to 1,100 MPa. Thus, the green compact is formed. Then, the upper punch 14 is moved upward, and concurrently the lower punch 15 is moved upward, to discharge the green compact out of the cavity 12a (to release the green compact from the mold).

Herein, in the process for forming the green compact described above, the heater 17 is activated to heat the die 16 (mold 12) at least a time period from the filling of the raw material powder 10 into the cavity 12a to the completion of the formation of the green compact. Specifically, the green compact is obtained by subjecting the raw material powder 10 filled into the cavity 12a to compression molding in the state in which the mold 12 is heated. The heating of the die 16 by the heater 17 is performed so that the temperature of the die 16 is 70°C or more, a temperature equal to or higher than the melting point of the solid lubricant 19 and 120°C or less. With this, a lubricant component of the solid lubricant 19 adhering to the surfaces defining the cavity 12a can diffuse and penetrate efficiently between the raw material powder 10 (green compact) and the cavity 12a, further between the powders constituting the raw material powder 10. Therefore, the moldability and mold releasability of the green compact are improved even when the amount of the solid lubricant 19 to adhere to the surfaces defining the die 12a or the amount of the solid lubricant to be added to the raw material powder 10 is reduced. Accordingly, this provides an advantage in obtaining the green compact having a high density and high accuracy, and by extension, the gear 1 having high strength.

It should be noted that the heating of the die 16 by the heater 17 may be performed so as to keep the die 16 in the above-mentioned temperature range at all times. In addition, while this embodiment adopts a so-called internal heating method of heating the die 16 (mold 12) by the heater 17 disposed inside the die 16, an external heating method of heating the mold 12 by the heater or the like disposed outside the mold 12 may be adopted. In addition, the raw material powder 10 preliminarily heated may be filled into the cavity 12a of the mold 12.

The green compact thus obtained is transferred to the sintering step S3. In the sintering step S3, the green compact is heated at a temperature equal to or higher than the sintering temperature of the iron-based alloy powder constituting the green compact, to bind by sintering the powders adjacent to each other. Thus, a sintered compact 1' is obtained (see FIG. 6). Sintering in an active gas atmosphere such as oxygen may cause oxidation of the powder constituting the green compact and adversely affect the mechanical strength and the like of the sintered compact 1', and by extension, of the gear 1, because the green compact is obtained through compression molding of the raw material powder 10 containing as a main raw material the iron-based alloy powder. Therefore, in the sintering step S3, the green compact is placed in an inert gas atmosphere (for example, nitrogen gas atmosphere) and heated at 1,200°C or more and 1,300°C or less (for example, 1,250°C) for a predetermined time period, to provide the sintered compact 1'. The reason why the lower limit of the heating temperature is set to 1,200°C is that, when the green compact is heated at a lower temperature (for example, 1,120°C, which is a temperature for forming a sintered compact of a general iron-based metal), the powders fail to be bound to each other with sufficient binding strength. In addition, the reason why the upper limit of the heating temperature is set to 1,300°C is that a strength improving effect is saturated. It should be noted that the green compact may be sintered in vacuum, not in the inert gas atmosphere as described above.

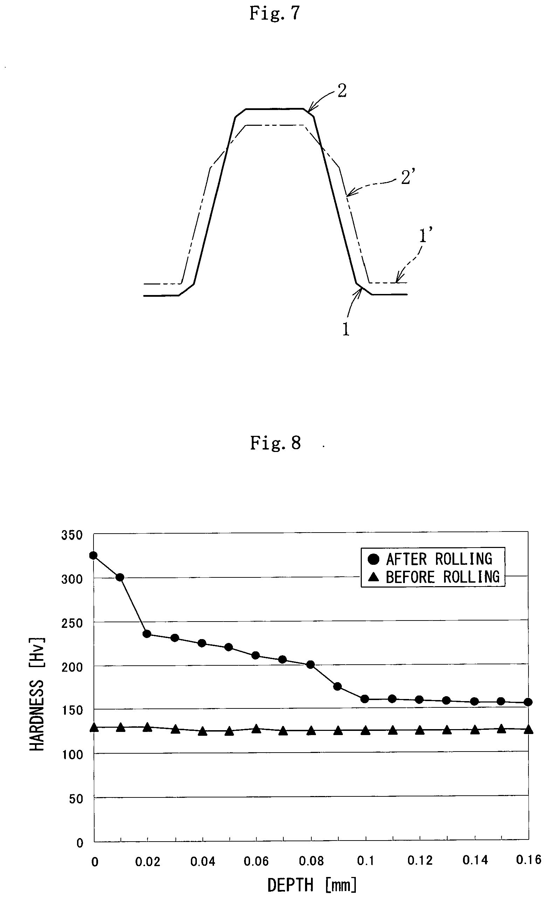

The sintered compact 1' thus obtained is transferred to the plastic processing step S4. In the plastic processing step S4, the sintered compact 1' is subjected to plastic processing to form the tooth surface 2 in a finished shape on the outer circumference of the sintered compact 1'. The formation of the tooth surface 2 is performed by, for example, using a rolling machine 20 as schematically illustrated in FIG. 6. The rolling machine 20 includes a support shaft 23 for supporting the sintered compact 1' in a rotatable manner, two roller dies 21, 22 each arranged at the radially outer side of the support shaft 23 and having a forming portion for forming the tooth surface 2 on its outer circumference. The two roller dies 21, 22 are arranged so as to face each other across the support shaft 23 (sintered compact 1'). In such rolling machine 20, the roller dies 21, 22 are rotated while being pressed against the outer circumference of the the sintered compact 1' supported by the support shaft 23 in a rotatable manner (rotated in a counterclockwise direction in the example illustrated in FIG. 6). With this, the tooth surface 2 in a finished shape is formed on the entire circumference of the the sintered compact 1'. It should be noted that the rolling processing described above is performed on, for example, the sintered compact 1' including a tooth surface 2' constructed by consecutively providing tooth portions each having an involute shape (see the two-dot chain line in FIG. 7). In this case, the tooth portions constituting the tooth surface 2' are each subjected to compression deformation in the circumferential direction and elongation deformation in the radial direction along with the rolling processing, to be formed into a tooth portion in a finished shape illustrated by the solid line in FIG. 7.

In addition, along with this, the porous structure on the outer circumference of the sintered compact 1' is densified to form the dense layer 7 (see FIG. 2). When the porous structure is densified to form the dense layer 7 as described above, pores in which stress is to be concentrated are reduced, and thus, the tooth surface 2 excellent in mechanical strength, particularly in fatigue strength, is obtained.

The rolling processing (plastic processing step S4) described above may be performed in any temperature range for cold processing, warm processing, or hot processing. It should be noted that cold rolling processing is preferred from the viewpoints of improving the formation accuracy of the tooth surface 2 and prolonging the durability lifetime of the roller dies 21, 22.

Now, FIG. 8 shows measured results of the hardness of the sintered compact 1' on its outer circumference before and after the plastic processing. As apparent from FIG. 8, the hardness of the the sintered compact 1' on its outer circumference is significantly increased after the rolling processing as compared to before the rolling processing. The hardness significantly increases particularly around the surface of the sintered compact 1', gradually reduces therefrom to the core portion (inner portion) of the sintered compact 1', and becomes almost constant beyond a predetermined depth.

Through the steps described above, the sintered compact 1' having a true density ratio of 97% or more and less than 100%, herein having a true density ratio of 97% (roughly corresponding to 7.6 g/cm$^3$ when converted into a density) is formed.

Finally, the sintered compact 1' having the tooth surface 2 in a finished shape formed therein is transferred to the heat treatment step S5. In the heat treatment step S5, the sintered compact 1' is subjected to heat treatment, to form the hardened layer 8 on the entire surface area of the sintered compact 1' associated with quenching (see FIG. 2). With this, the mechanical strength and abrasion resistance of the sintered compact 1' are entirely increased. In particular, the mechanical strength and abrasion resistance of the area in which the dense layer 7 is formed are further increased in the sintered compact 1'. The method for the heat treatment is not particularly limited, and any known method such as carburizing quenching, immersion quenching, or high-frequency quenching can be appropriately adopted. Herein, carburizing quenching is adopted. Tempering is performed after the quenching in order to provide the sintered compact 1' (gear 1) with high toughness as well as high mechanical strength and the like.

Through the steps described above, the gear 1 as the machine part as illustrated in FIGS. 1 and 2 is completed. After the heat treatment step S5, with a view to further improving the accuracy of the portions of the sintered compact 1' (gear 1), finishing processing such as grinding processing, polishing processing, lapping processing, or super finishing processing may be performed, as required.

As described above, the gear 1 formed of a sintered metal according to the present invention has a true density ratio of 97% or more and less than 100% (roughly corresponding to 7.6 g/cm$^3$ or more and less than 7.8 g/cm$^3$ when converted into a density) and is highly densified to the extent approximate to that in the case of an ingot material. Therefore, the gear 1 exhibits excellent characteristics in mechanical strength, abrasion resistance, fatigue strength, and the like.

As a result of diligent studies, the inventors of the invention of the present application have realized the sintered compact 1' having a high density and high strength by adopting the following constructions (1) and (2) particularly in a material aspect: (1) selectively using as a main raw material constituting the raw material powder 10 the iron-based alloy powder containing molybdenum; and (2) setting the blending ratio of the carbon powder in the raw material powder 10 to from 0.1 to 0.8 mass%, which is lower than that in a general sintered metal. Specifically, the adoption of the above-mentioned construction (1) improves the compression moldability and the sintering property. The adoption of the above-mentioned construction (2) further improves the compression moldability along with a reduction in the blending amount of carbon having a low specific gravity, while securing lubricity between the powders and hardenability after sintering. Thus, a high density is achieved.

In addition, the gear 1 includes the hardened layer 8 formed through the heat treatment after the sintering, and hence achieves high strength. Particularly in this embodiment, the sintered compact 1' is subjected to carburizing, quenching, and tempering as the heat treatment, and hence the hardness of the gear 1 gradually reduces from the surface to the core portion. Therefore, the gear 1 has high toughness as well, and hence is excellent in durability lifetime and impact resistance.

On the other hand, the use of the raw material powder containing the iron-based alloy powder as a main raw material and having an appropriate amount of the carbon powder blended therein, as the raw material powder 10 for obtaining the gear 1 eliminates the need for troublesome treatment such as granulation treatment disclosed in Patent Literature 1 in the process of preparing and producing the raw material powder 10. Therefore, manufacturing cost can be significantly reduced as compared to the construction of Patent Literature 1. As described above, according to the present invention, it is possible to mass-produce the gear 1 formed of a sintered metal that is excellent in mechanical strength, abrasion resistance, fatigue strength, and the like and has high toughness at low cost.

The method of manufacturing the gear 1 formed of a sintered metal according to embodiments of the present invention have been described above, but the composition of the raw material powder 10 suitable for manufacturing of the gear 1 is not limited to the one described above.

For example, the raw material powder 10 that contains as a main raw material iron based alloy powder containing molybdenum (partially alloyed powder of molybdenum-iron) and has carbon powder and chromium (Cr) powder blended therein may be used. In this case, there may be given, for example, a construction in which the powders are blended so that the contents of molybdenum, carbon, and chromium may be from 0.2 to 0.8 mass%, from 0.1 to 0.8 mass%, and from 0.5 to 2.0 mass%, respectively, and the balance may be iron (and an unavoidable impurity), given that the mass of the raw material powder 10 is defined as 100. In addition, for example, the raw material powder 10 that contains as a main raw material iron based alloy powder containing molybdenum and nickel (partially alloyed powder of molybdenum-nickel-iron) and has carbon powder and manganese sulfide (MnS) powder blended therein may also be used. In this case, there may be given, for example, a construction in which the powders are blended so that the contents of molybdenum, nickel, carbon, and manganese sulfide may be from 0.2 to 0.8 mass%, from 0.2 to 0.8 mass%, from 0.1 to 0.8 mass%, and from 0.5 to 2.0 mass%, respectively, with the balance being iron (and inevitable impurities), given that the mass of the raw material powder 10 is defined as 100.

In addition, the plastic processing step S4 may be omitted while, in the embodiment described above, the plastic processing step S4 is performed between the sintering step S3 and the heat treatment step S5, and in the plastic processing step S4, the sintered compact 1' is formed into a finished shape and the dense layer 7 in which a porous structure is more densified than in another area is formed. Specifically, the plastic processing step S4 can be omitted when the green compact in a finished shape can be formed through the compression molding step S2 and the sintered compact 1' having a true density ratio of 97% or more and less than 100% can be obtained only by forming the hardened layer 8 through the heat treatment step S5.

In addition, although the case in which the present invention is applied to a gear for a transmission of an automobile has been described above, the present invention can also be applied to any other machine part such as a gear or a cam to be used by being incorporated into various mechanical devices (for example, a cam for a vane pump). In particular, the machine part according to the present invention is formed of a sintered compact highly densified to the extent approximate to that of an ingot material and can be mass-produced at low cost while securing high mechanical strength and high abrasion resistance, and hence is extremely advantageous because the machine part can be applied to such application in which replacement from a machine part formed of an ingot material has hitherto been difficult and thus contribute to reduction in cost of various mechanical devices.

Reference Signs List

1 gear (machine part)
1' sintered compact
2 tooth surface
7 dense layer
8 hardened layer
10 raw material powder
12 mold
12a cavity
17 heater
18 lubricant injection nozzle
19 solid lubricant
20 rolling machine
S1 raw material powder preparation step
S2 compression molding step
S3 sintering step
S4 plastic processing step
S5 heat treatment step

Claims

1. A method of manufacturing a machine part (1) comprising a sintered compact (1') having a true density ratio of 97% or more and less than 100%, the method comprising:

a compression molding step (S2) of compression molding raw material powder (10) that contains as a main raw material iron-based alloy powder containing molybdenum and has 0.1 to 0.8 mass% of carbon powder blended therein, in a mold (12) to obtain a green compact;
a sintering step (S3) of heating the green compact at 1,200°C or more and 1,300°C or less, to obtain a sintered compact (1'); and
a heat treatment step (S5) of subjecting the sintered compact (1') to heat treatment to form a hardened layer (8), wherein, in the compression molding step (S2), a solid lubricant (19) adheres to surfaces (13a, 15a, 16a) defining a cavity (12a) of the mold (12), and then the compression molding of the raw material powder (10) filled into the cavity (12a) is performed in a state in which the mold (12) is heated at a temperature equal to or higher than a melting point of the solid lubricant (19), such that a lubricant component of the solid lubricant (19) adhering to the surfaces (13a, 15a, 16a) defining the cavity (12a) can diffuse and penetrate between the raw material powder (10) and the cavity (12a), and between the powders constituting the raw material powder (10),

wherein the true density ratio is calculated by the following calculation formula:

$$\text{true density ratio} = (\text{density of entire machine part formed of sintered compact/true density}) \times 100 \ [\%],$$

and

wherein the "density of entire machine part formed of sintered compact" in the calculation formula is measured by a method specified in JIS Z2501.

2. The method of manufacturing a machine part (1) according to claim 1, wherein the raw material powder (10) to be used has a solid lubricant added thereto.

3. The method of manufacturing a machine part (1) according to claim 1 or 2, further comprising a plastic processing step (S4) of subjecting the sintered compact (1') to plastic processing between the sintering step (S3) and the heat treatment step (S5).

4. The method of manufacturing a machine part (1) according to claim 3, wherein the plastic processing comprises rolling processing.


**Patentansprüche**

1. Verfahren zur Herstellung eines Maschinenteils (1), umfassend einen Sinterkörper (1') mit einem Reindichteverhältnis von 97% oder mehr und weniger als 100%, wobei das Verfahren umfasst:

einen Formpressschritt (S2), bei dem ein Rohmaterialpulver (10), das als Hauptrohmaterial eine pulverförmige Legierung auf Eisenbasis aufweist, die Molybdän enthält und der 0,1 bis 0,8 Masse-% Kohlenstoffpulver beigemischt sind, in einer Form (12) formgepresst wird, um einen Grünling zu erhalten;
einen Sinterschritt (S3), bei dem der Grünling auf wenigstens 1200°C und höchstens 1300°C erwärmt wird, um einen Sinterkörper (1') zu erhalten, und
einen Wärmebehandlungsschritt (S5), bei dem der Sinterkörper (1') einer Wärmebehandlung unterzogen wird, um eine gehärtete Schicht (8) zu bilden,
wobei im Formpressschritt (S2) ein Festschmiermittel (19) an Oberflächen (13a, 15a, 16a) haftet, die einen Hohlraum (12a) der Form (12) definieren, und anschließend das Formpressen des in den Hohlraum (12a) gefüllten Rohmaterialpulvers (10) in einem Zustand durchgeführt wird, in dem die Form (12) auf eine Temperatur gleich oder höher als ein Schmelzpunkt des Festschmiermittels (19) erwärmt wird, so dass eine Schmiermittelkomponente des Festschmiermittels (19), das an den Oberflächen (13a, 15a, 16a) haftet, die den Hohlraum (12a) definieren, zwischen das Rohmaterialpulver (10) und den Hohlraum (12a) sowie zwischen die Pulver, die das Rohmaterialpulver (10) bilden, diffundieren und eindringen kann,
wobei das Reindichteverhältnis nach folgender Berechnungsformel berechnet wird:

$$\text{Reindichteverhältnis} = (\text{Dichte des gesamten Maschinenteils, das als Sinterkörper gebildet wird/Reindichte}) \times 100 \ [\%],$$

und
wobei die "Dichte des gesamten Maschinenteils, das als Sinterkörper gebildet wird" in der Berechnungsformel nach einem in JIS Z2501 vorgegebenen Verfahren gemessen wird.

2. Verfahren zur Herstellung eines Maschinenteils (1) nach Anspruch 1, wobei das zu verwendende Rohmaterialpulver (10) mit einem Festschmiermittel versetzt wird.

3. Verfahren zur Herstellung eines Maschinenteils (1) nach Anspruch 1 oder 2, ferner umfassend einen plastischen Verarbeitungsschritt (S4), bei dem der Sinterkörper (1') einer plastischen Verarbeitung zwischen dem Sinterschritt (S3) und dem Wärmebehandlungsschritt (S5) unterzogen wird.

4. Verfahren zur Herstellung eines Maschinenteils (1) nach Anspruch 3, wobei die plastische Verarbeitung eine Verarbeitung mittels Walzen umfasst.

**Revendications**

1. Procédé de fabrication d'une pièce de machine (1) comprenant un compact fritté (1') ayant un rapport de densité réel de 97% ou plus et inférieur à 100%, le procédé comprenant :

   une étape de moulage par compression (S2) qui consiste à mouler par compression une poudre de matière première (10) qui contient, en guise de matière première principale, une poudre d'alliage à base de fer qui contient du molybdène et possède 0,1 à 0,8% en masse de poudre de carbone mélangée à l'intérieur, dans un moule (12) afin d'obtenir un compact vert ;
   une étape de frittage (S3) qui consiste à chauffer le compact vert à 1 200 °C ou plus et à 1 300 °C ou moins, afin d'obtenir un compact fritté (1') ; et
   une étape de traitement thermique (S5) qui consiste à soumettre le compact fritté (1') à un traitement thermique afin de former une couche durcie (8),
   dans lequel, à l'étape de moulage par compression (S2), un lubrifiant solide (19) adhère aux surfaces (13a, 15a, 16a) qui définissent une cavité (12a) du moule (12), puis le moulage par compression de la poudre de matière première (10) placée dans la cavité (12a) est effectué dans un état dans lequel le moule (12) est chauffé à une température égale ou supérieure à un point de fusion du lubrifiant solide (19), de sorte qu'un composant de lubrifiant du lubrifiant solide (19) qui adhère aux surfaces (13a, 15a, 16a) qui définissent la cavité (12a) puisse se diffuser et pénétrer entre la poudre de matière première (10) et la cavité (12a), et entre les poudres qui constituent la poudre de matière première (10),
   dans lequel le rapport de densité réel est calculé par la formule de calcul suivante :

   rapport de densité réel = (densité de la pièce de machine entière formée du compact fritté/densité réelle)x100 [%],

   et
   dans lequel la « densité de la pièce de machine entière formée du compact fritté » dans la formule de calcul est mesurée par un procédé spécifié dans JIS Z2501.

2. Procédé de fabrication d'une pièce de machine (1) selon la revendication 1, dans lequel la poudre de matière première (10) à utiliser possède un lubrifiant solide ajouté à celle-ci.

3. Procédé de fabrication d'une pièce de machine (1) selon la revendication 1 ou 2, qui comprend en outre une étape de traitement plastique (S4) qui consiste à soumettre le compact fritté (1') à un traitement plastique entre l'étape de frittage (S3) et l'étape de traitement thermique (S5).

4. Procédé de fabrication d'une pièce de machine (1) selon la revendication 3, dans lequel le traitement plastique comprend un traitement par roulage.

Fig. 1

Fig. 2

Fig. 3

RAW MATERIAL POWDER PREPARATION STEP — S1

↓

COMPRESSION MOLDING STEP — S2

↓

SINTERING STEP — S3

↓

PRASTIC PROCESSING STEP — S4

↓

HEAT TREATMENT STEP — S5

Fig. 4

## Fig. 5

## Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011094789 A
- EP 1839780 A2